# EUROPEAN PATENT SPECIFICATION

(11) **EP 1 455 590 B1**
(45) Date of publication and mention of the grant of the patent: **16.01.2008**
(21) Application number: 02791661.8
(22) Date of filing: 08.11.2002
(51) Int. Cl.: A23D 9/013, A23D 9/007, A23L 1/24, A23L 1/22

(54) **STABLE DISPERSION OF PARTICLES IN EDIBLE OIL**
STABILE DISPERSION VON PARTIKELN IN ESSBAREM ÖL
DISPERSION STABLE DE PARTICULES D'HUILE ALIMENTAIRE

(30) Priority: 19.12.2001 EP 01205001
(43) Date of publication of application: 15.09.2004
(73) Proprietor: UNILEVER N.V., 3013 AL Rotterdam (NL); UNILEVER PLC, London EC4P 4BQ (GB)
(72) Inventor: FLÖTER, Eckhard, c/oUnilever R & D Vlaardingen, NL-3133 AT Vlaardingen (NL); HOGERVORST, Wim, c/oUnilever R & D Vlaardingen, NL-3133 AT Vlaardingen (NL); IBURG, Jan, Eric,Unilever R & D Vlaardingen, NL-3133 AT Vlaardingen (NL)
(74) Representative: Joppe, Hermina Laura Petronella
(86) International application number: PCT/EP2002/012282
(87) International publication number: WO 2003/051136

(56) References cited:
- EP-A- 0 753 555
- WO-A-00/36076
- WO-A-00/38546
- WO-A-01/50873
- WO-A-99/48377

## Description

The present invention relates to a pourable lipid based matrix in which particles are stably dispersed. The invention also relates to a proces for preparing such dispersion.

### BACKGROUND OF THE INVENTION

Transparent salad dressings containing particles in the form of a stable dispersion are well known. Such dressings consist of a translucent aqueous matrix with particles in more or less fixed positions. The particles do not settle at the bottom or get floating on the liquid surface, although the particles and their aqueous environment have a different density. The salad dressings have obtained their dispersion stability by the presence of a small amount of a stabiliser which is dissolved in the continuous aqueous phase of the dressing. Usually xanthan gum is chosen to act as stabiliser. With the term density the speciifc weight of a substance is meant.

The stabiliser amount is so low that the dressing retains a pourable consistency. But it is sufficient for imparting to the aqueous phase an internal structure which enables particles to remain stably distributed throughout the dressing. The particles often consist of herbs, spices and also of oil droplets. When the particles settle at the bottom of the container or separate as a top layer, shaking the container of such non-stabilized dressing would restore the dispersion for a short time. This is no desirable option for bottles still on the shelves of the supermarket. A layer of separated ingredients spoils the appearance of a dressing when contained in a clear glass vessel. The presence of a stabiliser improves the appearance and ensures that the composition of a dispersion product remains the same throughout the whole sample during the lifetime of the product.
The limpid dressings with clearly visible particles have an attractive transparent appearance. However, biopolymers like xanthan are suited for structuring aqueous phases only. They are useless for doing the same in an oil phase.

Since long it is desired to develop a corresponding food product which is similar to said dressing but which is fat continuous. Such product should enable the stable incorporation of evenly distributed particles, while remaining pourable and substantially translucent. Such products would offer quite interesting and useful applications for the preparation of edible oil based compositions. A stable dispersion of particles evenly distributed in oil can be realized by prior art methods. But those prior art methods only deal with structuring the oil phase, with improving nutritional value and mouthfeel-of the product and with increasing stability against product disintegration. From the pourable dispersions two categories, the liquid shortenings and the liquid margarines, are characterized by dispersed particles which are liquid droplets. Those products are turbid. Other prior art deals with fat matrices containing solid suspended matter. Suitable methods are described in WO 9847386, EP 775444, EP 63835 and WO 9948377. However, none of these references addresses the problem of realizing transparency of the final product. Generally, the combination of oil structurant and manufacturing process in the prior art is not suited for delivering a product with a translucency exceeding 55%. Moreover, some of the processes in those references apply such high shear that they definitely are not suited for the manufacture of dispersions of shear sensitive particles.

Micro-emulsions are translucent oils which contain stably dispersed droplets, but these emulsions are able to stably harbour only aqueous droplets of sub-micron size.

Known prior art dispersions in oil do show microbiological stability and a perception of freshness. Dispersed particles that contain a significant amount of water, like herbs, are prone to microbiological spoilage, to leaching out of natural colour and to the development of sogginess when staying in a water-continuous system. Such particles when embedded in a fat-matrix do not not suffer from those drawbacks. Because of their fat-continuous nature these dispersion products possess a natural conservation. A characteristic product can be prepared according to EP 775444. However, depending on the type and amount of the particles dispersed, for an average consumer their appearance is little attractive: often they resemble to a coloured and inhomogeneous spread product. Products as are shortenings and liquid margarines may contain structured liquid oils, but their appearance and consistency is far remote from the sought translucent, pourable oil which is the aim of the present invention.

The composition of WO 99 48 377 comprises an oil containing a structurant, being either a triglyceride fat or an emulsifier, and a stably suspended particulate component. This suspension solves a problem which is different from the problem of imparting translucency. The problem is avoiding harmful spreading of dust when dosing into a mixture fine powder substances such as enzymes. The described homogeneous suspension allows accurate dosing without spreading dust. The desired maximum loading of the composition with particles conflicts however, with the equally desired feature of pourability. Translucency of the product is not existent at all and even not possible with the used amounts of structurant and the actual processing conditions.

None of the prior art methods is able to manufacture a pourable oily dispersion containing stably dispersed particles, as are e.g. herbs, while simultaneously providing a translucent appearance. The known products may be able to keep the desired load of particles stably dispersed, but they have a turbid appearance or, when being close to the desired translucency, they are incapable of sufficiently stabilizing the dispersed particulate matter in a fat-continuous product. These results are in line with common assumptions that for the achievement of a structured lipid matrix the final crystallization of the lipid phase needs the application of shear. Stability in such a context can only be improved by increasing the content of lipid solids. This is at the expense of translucency, since translucency in general deteriorates when the level of solid lipid material is increased.

For the preparation of a pourable oily suspension, we have surprisingly found a process which reconciles seemingly contradicting conditions: an oil having a low structuring lipid content which nevertheless is sufficiently strong to keep particles of many kinds and sizes stably distributed.

The low structurant content enables good pourability as well as an attractive translucent appearance. In contradiction to the typical manufacture of pourable structured lipid phases we have been able to find the specific conditions of product composition and manufacturing process which allow the manufacture of an oil-based matrix which exhibits not only a pourable consistency and the ability to keep particles of many kinds and sizes stably distributed, but which also possesses a translucent appearance.
The present product exhibits the same attractive translucent appearance which is characteristic for the xanthan gum based dressings as described hereinbefore.

### BRIEF DESCRIPTION OF THE FIGURES

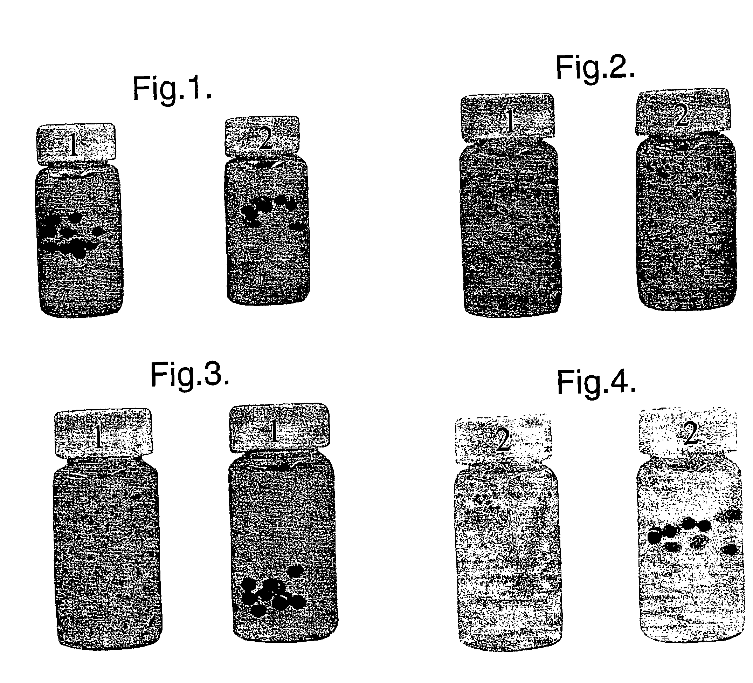

Both figures 1 and 2 show vessels containing a lipid matrix in which 24 hours earlier particles have been dispersed and subsequently stored at 5°C. The particles have a density which is different from the density of the matrix. The sole difference between figures 1 and 2 is the size and the density of the particles. In vessels denoted 1 the particles have been dispersed in sunflower oil in which only 0.375 wt.% of fully hydrogenated arachide oil has been dissolved. In vessels denoted 2 the particles have been dispersed in sunflower oil in which both 0.375 wt.% of fully hydrogenated arachide oil and 0.125 wt.% of fully hydrogenated high erucic rapeseed oil have been dissolved.
Figures 3 and 4 show the same vessels of figures 1 and 2 but after storage for 2 weeks at 15°C.
Figures 5 and 6 show the same vessels of figures 1 and 2 but after storage for 4 weeks at ambient conditions (20°C).
Figure 7 shows a sample of a matrix according to the invention and four comparison samples of matrices prepared according to the prior art.

### SUMMARY OF THE INVENTION

The invention provides a pourable food product consisting of particles stably dispersed in a translucent lipid matrix as defined in the claims. The stably distributed particles have a density which is either equal to the density of the matrix or differs from it to a maximum of plus or minus 25%.

The invention also comprises a process as defined in the claims for preparing said pourable product. Key elements of the process are a prior step of quick and deep cooling of the liquefied lipid matrix, followed by a final crystallization of the super saturated lipid in the absence of disturbing shear. While admixing the particulate component the lipid matrix is gently stirred to yield a translucent, pourable dispersion.

### DETAILS OF THE INVENTION

The invention provides a novel food product which contains particles of various kinds with regard to composition, size, form and colour and which particles, irrespective of a density which is different from or equal to the density of the surrounding matrix, remain stably distributed in a translucent matrix. For the sake of definition the matrix should be understood to comprise the liquid oil together with the structuring lipid crystallised in the oil.

Both the composition and the preparation of the matrix impart a light structure to the liquid oil without adversely affecting the translucency and pourability of the matrix. The structure ensures a surprisingly good stability of particles distributed in the matrix.
The obtained food product is limpid, disregarding turbidity which is caused by dispersing particles in the matrix, particularly in a large amount.

The matrix essentially consists of a translucent, pourable, edible lipid comprising a liquid part and a crystallised part. For the liquid part preferably a clear triglyceride oil is chosen such as e.g. sunflower oil, rapeseed oil, corn oil or olive oil or mixtures of such oils. The matrix lipids preferably consist of 1 - 100 wt.% of triglycerides and 0 - 99 wt.% of diglycerides.

The ingredient which by its admixture imparts to the oil the necessary structuring ability is suitably chosen from the group consisting of fully saturated triglyceride fats, plant sterols and esters of plant sterols and 12-hydroxystearic acid.
Suitable fats are, for example, fully hydrogenated high erucic rapeseed oil, fully hydrogenated interesterified high erucic rapeseed oil, interesterified fully hydrogenated interesterified high erucic rapeseed oil, fully hydrogenated sunflower oil, fully hydrogenated arachide oil, fully hydrogenated palm oil and mixtures of these.
A synergistic combination of a hydrogenated fat and 12-hydroxystearic acid can be beneficial for the dispersion stability.

For a good matrix the concentration of crystal lattice forming lipid material, the structurant, is critical. Too much structurant decreases pourability and translucency of the matrix, too little causes dispersion instability. Some structurants may be present in high concentrations without a noticeable decrease of pourability and translucency. For other structurants already a low amount adversely affects both properties.
Suitable amounts are 0.1 - 0.9 wt.%, preferably 0.2 - 0.7 wt.%, more preferably 0.4 - 0.6 wt.% on matrix.

Addition of a substance which has emulsifying functionality to the fat phase promotes the formation of small structuring fat crystals which remain small during subsequent storage because recrystallisation is slowed down. Preferred emulsifiers are chosen from the group consisting of polyglycerol fatty acid esters, sorbitan esters, polyglycerol polyricinoleate, polyoxyethylene sorbitan esters, propylene glycol esters and sucrose fatty acid esters.
These substances are admixed in amounts preferably being in the range 0.1 - 2 wt.% calculated on lipid.

In order that the present matrix can properly act as a carrier for the dispersed particles due care has to be given to its preparation.

For obtaining crystals of the correct size which are able to aggregate to a stabilising crystal lattice, the processing of the lipid of the matrix is deviant from what is usual in the prior art.

A process for the preparation of a pourable translucent matrix according to the present invention is characterised by the following steps
- selecting a liquid lipid and a solid lipid which is able to form a crystal lattice in the liquid lipid,
- heating a mixture of the liquid lipid and >0.1 wt.%, but < 1 wt.% of the solid lipid until the solid lipid has been fully dissolved or liquefied,
- cooling the lipid mixture down to 0°-5°C within 2 minutes, preferably within 1 minute,
- allowing the mixture to crystallize at 0°-5°C under quiescent conditions (without any shear) for at least 1 hour, preferably for at least 24 hours.

For strong cooling down to 0°-5°C under high shear use of a scraped surface heat exchanger is expedient.

Subsequently the selected particulate matter is added to the crystallised matrix. While distributing the particulate matter evenly in the matrix, the matrix, which has been build up essentially in rest, should be disturbed as little as possible. Therefore, in order to achieve a stable distribution of the particulate matter only gentle, low shear stirring must be applied.
The matrix of the invention may be loaded with particulate matter in an amount of 0.1 - 30 wt.% on food product.

In contrast to prior art, key parameters of the present process are first applying deep high shear cooling during a short time, followed by a final quiet crystallisation process where shear is avoided and, finally, admixing under low shear the particulate matter.

Without wishing to be bound by theory it is believed that the effect of the applied process is caused by initial high supersaturation followed by an abundant proliferation of small crystal nuclei which under the conditions of final quiescent maturation develop into crystal aggregates which form the strong crystal lattice of the matrix. Deep high shear cooling in combination with quiescent maturation is believed to be essential for obtaining the desired translucency and pourability advantage.

The obtained dispersion is stable. Stability in this respect means that the stable distribution of the particles is maintained for at least two weeks after preparation. Preferably the dispersion has such stability that, after quiet storage at 15°C for three months following preparation either the upper half of the volume of a sample of the dispersion still contains the same content of particles as the lower half volume, or less than 10 wt.% of the particles have migrated from one half volume to the other half volume. Generally, such stability is sufficient for the anticipated lifetime of the product.
The stability of the dispersion ensures that during the lifetime of the food product doses poured from both a fresh bottle and from a nearly empty bottle substantially have the same composition.

Because ingredients and conditions may vary within the scope of the present invention, the skilled may need some trials to find for an actual preparation the optimum preparation protocol.

A much appreciated property of the new matrix is its good pourability. Products prepared with such matrix can be dosed easily by pouring from the glass vessels which are in use for such products.
The lipids of the matrix are chosen such that a suitable viscosity is obtained, taking into account that the subsequent incorporation of particles may have a viscosity increasing effect.

Pourability is assessed using the standard Bostwick protocol (see Examples section). The matrix when not charged with particles, has a Bostwick value which preferably is at least 12, more preferably at least 18. The pourability equals or exceeds the pourability of existing shortening oils or liquid margarines and corresponds with a viscosity of about 150 mPa.s or less.

Translucency is measured according to a protocol to be found in the examples section. For a matrix without particles translucency is defined as an at least 55% transmission when applying a 589 nm light beam. It is an extremely surprising feature of the invented product that a stable oily dispersion shows translucency as well as pourability.

It will be obvious to the man skilled in the art and is in line with basic physical principles that adding particulate matter to the limpid matrix, generally, will have an impact on the translucency and the pourability of the final dispersion. Therefore characteristic translucency and pourability values are established before the matrix is charged with particles.

The crystal lattice ensures that the dispersed particles remain stably distributed for months. Exposure of the product to much shear, by vigorous shaking for example, as well as to temperature cycling might damage and even destroy the structure of the crystal lattice. A temporary absence of structure might result in phase separation, depending on the structure-less period. Then the particles either will deposit at the bottom or get floating at the surface of the sample, depending on their density. Sometimes early self-repair of the crystal lattice occurs so that separation after lattice disrupture is prevented.

By the naked eye the particles of the final product may be distinguished separate from each other either by their size, colour or form. Preferably the particles have a natural, e.g. vegetable origin such as herbs and fruits particles, e.g. olive particles. They may comprise various kinds like cooking salt, seeds, gas bubbles, flour, proteins, vitamins, polyphenols, droplets of various aqueous solutions. They may be moisture sensitive and have a brittle structure, but, essentially, should not be oil soluble.

In a food product according to the invention dispersed particles may act as a visible, attractive cue which points to the presence of a desired functionality. Such functionality may be the presence of a specific flavour, of an anti-spattering agent, of vitamins or anti-oxidants. The functionality either is an attribute of the particles themselves or is otherwise present in the matrix as a result e.g. from dissolved ingredients.

A beneficial aspect of the invention is that it allows the densities of dispersed particles and matrix to be substantially different. Even after months of storage no phase separation occurs. Depending on the size of the particles, the allowed difference of the densities is limited as will be appreciated by the man skilled in the art. Small particles allow a larger difference than big particles as is demonstrated in the examples section. Generally, a maximum 25% difference, plus or minus, with the density of the matrix is allowed. Suitable densities of dispersed particles are in the range 0.8 - 1.2. This range might be extended proportional to a decrease in size of the particles. The density of the final dispersed phase may be adjusted by properly choosing the particle ingredients so that they will fit in said range.

The invented novel product makes a wide variety of food applications possible. Cooking fat in liquid form such as olive oil is increasingly preferred for cooking. Olive oil is a healthy and savoury food ingredient which enjoys a still increasing popularity. However, cooking with olive oil suffers from considerable spattering. The addition of cooking salt to the oil has shown its value by reducing spattering. Without the present invention no stable dispersion of cooking salt in a translucent cooking oil is possible. For cooking specific dishes a cooking oil prepared according to the present invention can be given further added value by having various herbs and spices dispersed in it.

Monosaccharides and proteins are known as Maillard ingredients. When both are present in food, they react with each other when baking the food which results in a tasty flavour. This pleasant flavour formation can be enhanced by including stably dispersed Maillard ingredients in the cooking oil.

Food ingredients, even when moisture sensitive, can be stabilized as a fat continuous dispersion in the present translucent matrix.

The invention is ilustrated with the examples as described below.

### GENERAL PREPARATION OF A STRUCTURED OIL PHASE

While stirring, 0.5 wt.% of a chosen hardstock fat (e.g. fully hydrogenated oil as are high erucic rapeseed oil, arachide oil or sunflower oil) is added to 500 gram of sunflower oil. Subsequently the temperature is raised above the melting point of the fat (generally 80°-110°C) to obtain a clear lipid mixture. This mixture in order to be quickly cooled is pumped through a 18 ml scraped surface heat-exchanger (exit 0°C, 2500 rpm at 50 ml/min). The cooled oil is discharged in a preferably transparent container. When quietly stored at 5°C for 24 hours a structuring crystal lattice is formed without adversely affecting translucency of the oil (figures 1 and 2).

### ASSESSING POURABILITY

Pourability is measured according to the standard Bostwick protocol which is provided with the measuring equipment. The Bostwick equipment consists of a 125 ml reservoir provided with a outlet near the bottom of a horizontally placed rectangular tub and closed with a vertical barrier. The device's bottom is provided with a 25 cm measuring scale, extending from the outlet of the reservoir. When equipment and sample both have attained a temperature of 15°C, the reservoir is filled with 125 ml of the sample after it has been shaken by hand ten times up and down. When the closure of the reservoir is removed the sample flows from the reservoir and spreads over the tub bottom. The path length of the flow is measured after 15 seconds. The value, expressed as cm per 15 seconds is the Bostwick rating, which generally is used as yard stick for pourability.

### ASSESSING DISPERSION STABILITY

Small and large test particles were prepared as follows: Under cautious stirring relatively small (on average about 1.5 mm) particles, droplets consisting of water, kappa carrageenan (2.5 wt%) and zeolite (1 wt%) with 700 - 1400 mesh size were fabricated. Through sieving a relatively homogeneous size distribution of particles around 1.5 mm having a density of 1.1 - 1.2 kg/dm³ (22 - 32% more than sunflower oil) was obtained. The density of the particles may be adjusted through the dissolution of adequate amounts of salt in the water phase.
The larger particles, consisting of water and gellan gum, were prepared in an analogous way. They have an average size of 3 mm and a density of 1.02 - 1.05 kg/dm³ (12' - 15% more than sunflower oil).

The sedimentation of the particles when dispersed in the oil matrix was observed and photographed after storage for 2 weeks at 15°C and again after an additional 2 weeks storage at ambient temperature. The degree of sedimentation is assessed by actual counting how much material has migrated from one half of the sample to the other half after 2 weeks. A sample is considered to maintain a stable distribution if less than 10 % of the particles have moved from one half to the other half after 2 weeks storage. The 4 weeks assessment in essence is a control and a confirmation of the previous assessment.

### MEASURING TRANSLUCENCY

The translucency (in this specification also denoted as transparency) of the matrix samples is determined by means of transmission spectroscopy. Samples stored at 5°C are heated up to 20°C and kept at this temperature for at least 4 hours prior to measurement. Measurement is carried out at 20°C with a Hewlett Packard Diode Array dual-beam spectrophotometer at a wavelength of 589 nm. Normal sunflower oil is the reference. Translucency is said to exist when transmission is at least 55%. After 4 weeks storage at ambient temperature samples are measured a second time. Also in this assay the second measurement is performed to make sure that the results of the initial assessment are valid over time.

### Example 1

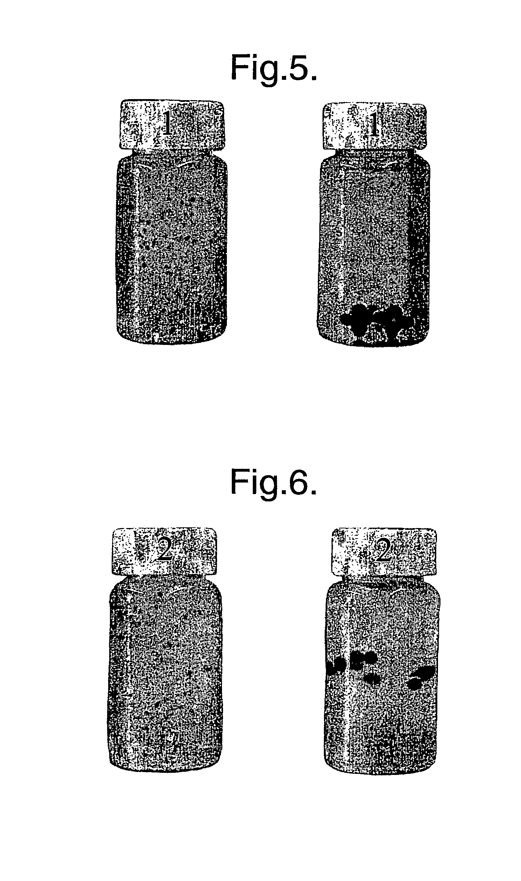

While stirring, fully hydrogenated arachide oil (0.375 wt.%) was dissolved in 500 gram of sunflower oil of 90°C. The clear oil mixture was subsequently pumped through a scraped surface heat-exchanger (volume 18 ml, exit 0°C, 2500 rpm at 50 ml/min). The cooled oil was discharged in 100 ml glass containers and stored at 5°C under quiescent conditions for 24 hours. After this resting period the viscosity and the transparency of the oil was measured. The Bostwick (15 seconds) value was 22 (corresponding to a viscosity < 150 mPa.s) which means a very pourable product; transparency after 24 hours: 75% transmission, measured against sunflower oil.
Subsequently the test particles were added. While distributing the particulate matter evenly in the matrix, the matrix should be disturbed as little as possible. Therefore, only gentle, low shear stirring must be applied Figures 1 and 2 show the dispersions after 24 hours at 5°C. The dispersion stability test proved that after storage for 2 weeks at 15°C the structured oil was able to keep the small (1.5 mm) particles dispersed in the matrix. At that time the larger (3 mm) particles were clearly no longer fixed in the matrix (figure 3) and after an additional 2 weeks at ambient temperature these particles were sedimented completely (figure 5). The smaller particles, although they have a higher density than the large particles, remained stably dispersed in the matrix, even when the storage temperature exceeded the preferred 15°C (figures 3 and 5).

### Example 2

A second matrix was made according to example 1. It additionally contained 0.125 wt.% of fully hydrogenated high erucic rapeseed oil. The Bostwick value was 20 (corresponding to a viscosity < 150 mPa.s) which means a very pourable product. Transparency after 24 hours: 72% transmission as measured against sunflower oil. The stability test showed that the matrix was able to keep the larger (3 mm) as well as the smaller (1.5 mm) particles stably dispersed in the oil. After storage for 2 weeks-at 15°C both types of particles were still fixed within the matrix (figure 4). After storage for an additional 2 weeks at ambient temperature the larger particles showed only slight sedimentation (figure 6). The smaller, but heavier salt-based particles were kept into the matrix quite well, both at 15°C and at ambient conditions. The consistency of both oily dispersions was very thin and so easily pourable.

### Example 3

Sample 1 contains fully hydrogenated high erucic rapeseed oil dissolved (0.5 wt.%) in 500 gram of sunflower oil of 90°C. As described in example 1 the clear oil mixture was quickly cooled down to 0°C and stored under quiescent conditions for 24 hours.

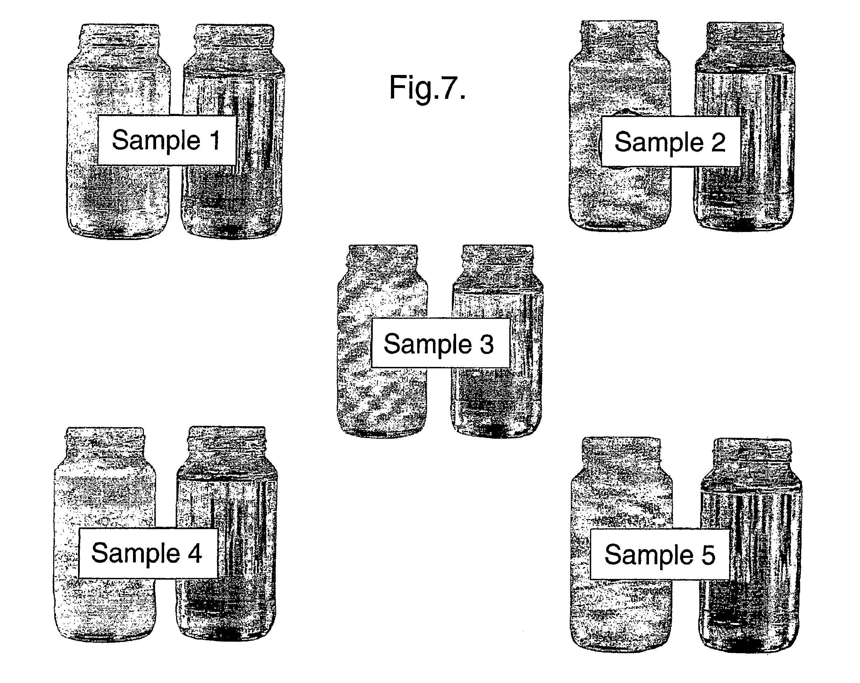

Comparison samples 2, 3, 4 and 5 containing the same lipids were prepared according to the following protocol as described in WO 99/48377.
Two oil mixtures were prepared by dissolving both 0.5 wt.% and 2.0 wt.% of fully hydrogenated high erucic rapeseed oil at 80°C in sunflower oil.
The mixtures were stabilized at a temperature of 60°C and subsequently cooled in a series of 2 bench top tube chillers, operating at 950 rpm. Cooling rates were adjusted such that an exit temperature of 5°C was realized.
The preparation of two more samples was repeated but these were cooled to 15°C. The four cooled blends were first stabilized under agitation at the exit temperature and then allowed to mature for 12 hours at 5°C.
Table 1 shows the pourability and translucency of the fat matrices after 2 weeks storage at 15°C and 2 subsequent weeks at ambient temperature. The photographs of figure 7 illustrate translucency. The right vessel of each sample picture contains pure sunflower oil for comparison.
The small and large test particles as described in the previous sections were admixed to the prepared matrices and evenly distributed by gentle stirring.
Table 1 shows the stability assessment of the suspensions after 2 weeks storage at 15°C and two subsequent weeks storage at ambient temperature.

It has appeared that the manufacture of stable suspensions which are pourable as well as translucent is possible only by following the preparation protocol according to the invention. The prior art processing as decribed in WO 99/48377 delivers with use of the same 0.5 wt.% of structuring lipid an insufficiently structured product. More stable suspensions may be obtained by increasing the level of the structuring lipid, but at the expense of pourability and/or translucency. A dispersion which is stable as well as pourable could not be realized. Moreover, products when stable, lack the translucency of the product manufactured according to the present invention. In summary: the comparison of the properties of samples 1 - 5 shows that only by observing the delicate combination of proper composition and proper processing according to the present invention a translucent and stable fat-continuous dispersion product can be obtained.

**TABLE 1**

| **Sm pl** | **RPhe70 % exit T (4)** | **Final treatment** | **Pourability** | **Translucency (1)** | **Stability (2) large partial** | **Stability (3) small particl** |
|---|---|---|---|---|---|---|
| 1 | 0.5% | No shear | Good | Fully translucent | Stable | Stable |
| | 0°C | | | | | |
| 2 | 0.5% | Stirring | Good | Opaque | Upper 40% of | Fully sedi- |
| | 5°C | | | less clear than 1 | sample empty | mented |
| 3 | 0.5% | Stirring | Good | Yellowish opaque, | Upper 30% of | Fully sedi- |
| | 15°C | | | less clear than 1 | sample empty | mented |
| 4 | 2.0% | Stirring | Not | Not translucent at | Stable | Stable |
| | 5.°C | | pourable | all | | |
| 5 | 2.0% | Stirring | Not | Not translucent at | Stable | Stable |
| | 15°C | | pourable | all | | |

| | | | | | | |
|---|---|---|---|---|---|---|
| (1) see also photographs of figure 7 (2) 10 wt % dispersion of small (1.5 mm) particles (3) 10 wt % dispersion of large (3 mm) particles (4) wt.% of structuring lipid: fully hydrogenated high erucic rapeseed oil temperature of matrix at exit of cooling unit | | | | | | |

## Claims

1. Pourable food product consisting of a lipid matrix containing stably dispersed particles having a size of at least one micron and a density which is 0 - 25% higher or lower than the density of the lipid, which lipid comprises 95 - 99.9 wt.% of a liquid lipid, at least 0.1 wt.% but less than 1 wt.% of a crystallized lipid and 0 - 4.9 wt.% of non-lipid material, percentages calculated on the matrix weight, where the matrix is **characterized by** a translucency of at least 55%.

2. Food product according to claim 1, **characterized in that** the matrix lipids consist substantially of triglycerides or diglycerides or a mixture of both.

3. Food product according to anyone of the previous claims, **characterized in that** the matrix lipids consist of 1 - 100 wt.% of triglycerides and 0 - 99 wt.% of diglycerides.

4. Food product according to anyone of the previous claims, **characterized in that** the crystallized lipid is chosen from the group consisting of fully saturated triglyceride fats, plant sterols, esters of plant sterols and 12-hydroxystearic acid.

5. Food product according to anyone of the previous claims, **characterized in that** the crystallized lipid is a fat chosen from the group consisting of fully hydrogenated high erucic rapeseed oil, interesterified fully hydrogenated high erucic rapeseed oil, fully hydrogenated sunflower oil, fully hydrogenated arachide oil and mixtures of these.

6. Food product according to anyone of the previous claims, **characterized in that** it contains a fully saturated triglyceride fat as well as 12-hydroxystearic acid.

7. Food product according to anyone of the previous claims, **characterized in that** the lipid contains 0.1 - 0.9 wt.%, preferably 0.2 - 0.7 wt.%, more preferably 0.4 - 0.6 wt.% on matrix of crystallized lipid material.

8. Food product according to anyone of the previous claims, **characterized in that** the lipid contains an emulsifier, preferably chosen from the group consisting of polyglycerol fatty acid esters, sorbitan esters, polyglycerol polyricinoleate, polyoxyethylene sorbitan esters, propylene glycol esters and sucrose fatty acid esters.

9. Food product according to the previous claim, **characterized in that** the lipid contains 0.1 - 2 wt.% of an emulsifier calculated on lipid.

10. Food product according to anyone of the previous claims, **characterized by** a lipid matrix which has a Bostwick value being at least 12, preferably at least 18.

11. Pourable food product according to anyone of the previous claims, **characterized in that** the content of dispersed particles is 0.1 - 30 wt.% on food product.

12. Pourable food product according to anyone of the previous claims, **characterized in that** the particles comprise moisture sensitive material.

13. Pourable food product according to anyone of the previous claims, **characterized in that** the material of the particles is chosen from the group consisting of cooking salt, fruit particles, herbs, seeds, gas bubbles, flour, proteins, vitamins, polyphenols and aqueous droplets.

14. Pourable food product according to anyone of the previous claims, **characterized in that** the particles can be separately distinguished with the naked eye.

15. Pourable food product according to anyone of the previous claims, **characterized in that** the particles can be separately distinguished by their colour and/or form.

16. Pourable food product according to anyone of the previous claims, **characterized in that** the stable distribution of particles in the matrix is maintained for at least 2 weeks after preparation.

17. Pourable food product according to anyone of the previous claims, **characterized in that** it has a dispersion stability as defined in the specification of at least three months.

18. Process for the preparation of a pourable food product according to anyone of the previous claims, **characterised by** the steps:
- selecting a liquid lipid and a solid lipid which is able to form a crystal lattice in the liquid lipid,
- heating a mixture of the liquid lipid and at least 0.1 wt.%, but less than 1 wt.% of the solid lipid until the solid lipid has been fully dissolved or liquefied,
- fast cooling the liquefied lipid mixture under strong shear conditions from 60°C down to 0°-5°C within 2 minutes, preferably within 1 minute,
- allowing the cooled mixture to crystallize at 0°-5°C under quiescent conditions for at least 1 hour, preferably for at least 24 hours, resulting in a translucent matrix,
- admixing to the matrix 0.1 - 30 wt.% of particles, the percentage calculated on final product, while gently stirring until the particles are evenly distributed.

## Patentansprüche

1. Gießbares Nahrungsmittelprodukt, bestehend aus einer Lipidmatrix, enthaltend stabil dispergierte Teilchen mit einer Größe von mindestens einem Mikrometer und einer Dichte, die 0 bis 25 % höher oder niedriger als die Dichte des Lipids ist, wobei das Lipid 95 bis 99,9 Gew.-% eines flüssigen Lipids, mindestens 0,1 Gew.-%, aber weniger als 1 Gew.-% eines kristallisierten Lipids und 0 bis 4,9 Gew.-% eines Nicht-Lipid-Materials umfaßt, wobei die Prozentsätze bezogen auf das Matrixgewicht berechnet sind, wobei die Matrix durch eine Transluzenz von mindestens 55 % **gekennzeichnet** ist.

2. Nahrungsmittelprodukt nach Anspruch 1, **dadurch gekennzeichnet, daß** die Matrixlipide weitestgehend aus Triglyceriden oder Diglyceriden oder einem Gemisch aus beiden bestehen.

3. Nahrungsmittelprodukt nach einem der vorhergehenden Ansprüche, **dadurch gekennzeichnet, daß** die Matrixlipide aus 1 bis 100 Gew.-% Triglyceriden und 0 bis 99 Gew.-% Diglyceriden bestehen.

4. Nahrungsmittelprodukt nach einem der vorhergehenden Ansprüche, **dadurch gekennzeichnet, daß** das kristallisierte Lipid aus der Gruppe, bestehend aus vollständig gesättigten Triglyceridfetten, Pflanzensterolen, Estern von Pflanzensterolen und 12-Hydroxystearinsäure, ausgewählt ist.

5. Nahrungsmittelprodukt nach einem der vorhergehenden Ansprüche, **dadurch gekennzeichnet, daß** das kristallisierte Lipid ein Fett ist, ausgewählt aus der Gruppe, bestehend aus vollständig hydriertem Rapsöl mit hohem Erucasäuregehalt, umgeestertem vollständig hydriertem Rapsöl mit hohem Erucasäuregehalt, vollständig hydriertem Sonnenblumenöl, vollständig hydriertem Erdnußöl und Gemischen davon.

6. Nahrungsmittelprodukt nach einem der vorhergehenden Ansprüche, **dadurch gekennzeichnet, daß** es ein vollständig gesättigtes Triglyceridfett sowie 12-Hydroxystearinsäure enthält.

7. Nahrungsmittelprodukt nach einem der vorhergehenden Ansprüche, **dadurch gekennzeichnet, daß** das Lipid 0,1 bis 0,9 Gew.-%, bevorzugt 0,2 bis 0,7 Gew.-%, stärker bevorzugt 0,4 bis 0,6 Gew.-%, bezogen auf die Matrix des kristallisierten Lipidmaterials, enthält.

8. Nahrungsmittelprodukt nach einem der vorhergehenden Ansprüche, **dadurch gekennzeichnet, daß** das Lipid einen Emulgator, bevorzugt ausgewählt aus der Gruppe, bestehend aus Polyglycerolfettsäureestern, Sorbitanestern, Polyglycerolpolyricinoleat, Polyoxyethylensorbitanestern, Propylenglycolestern und Saccharosefettsäureestern, enthält.

9. Nahrungsmittelprodukt nach einem der vorhergehenden Ansprüche, **dadurch gekennzeichnet, daß** das Lipid 0,1 bis 2 Gew.-% eines Emulgators, berechnet, bezogen auf das Lipid, enthält.

10. Nahrungsmittelprodukt nach einem der vorhergehenden Ansprüche, **gekennzeichnet durch** eine Lipidmatrix, die einen Bostwick-Wert von mindestens 12, bevorzugt mindestens 18, aufweist.

11. Gießbares Nahrungsmittelprodukt nach einem der vorhergehenden Ansprüche, **dadurch gekennzeichnet, daß** der Gehalt an dispergierten Teilchen 0,1 bis 30 Gew.-%, bezogen auf das Nahrungsmittelprodukt, beträgt.

12. Gießbares Nahrungsmittelprodukt nach einem der vorhergehenden Ansprüche, **dadurch gekennzeichnet, daß** die Teilchen feuchtigkeitsempfindliches Material umfassen.

13. Gießbares Nahrungsmittelprodukt nach einem der vorhergehenden Ansprüche, **dadurch gekennzeichnet, daß** das Material der Teilchen aus der Gruppe, bestehend aus Kochsalz, Fruchtstückchen, Kräutern, Samen, Gasbläschen, Mehl, Proteinen, Vitaminen, Polyphenolen und wässerigen Tröpfchen, ausgewählt ist.

14. Gießbares Nahrungsmittelprodukt nach einem der vorhergehenden Ansprüche, **dadurch gekennzeichnet, daß** die Teilchen einzeln mit dem bloßen Auge unterschieden werden können.

15. Gießbares Nahrungsmittelprodukt nach einem der vorhergehenden Ansprüche, **dadurch gekennzeichnet, daß** die Teilchen einzeln durch deren Farbe und/oder Form unterschieden werden können.

16. Gießbares Nahrungsmittelprodukt nach einem der vorhergehenden Ansprüche, **dadurch gekennzeichnet, daß** die stabile Verteilung der Teilchen in der Matrix für mindestens 2 Wochen nach der Herstellung aufrechterhalten wird.

17. Gießbares Nahrungsmittelprodukt nach einem der vorhergehenden Ansprüche, **dadurch gekennzeichnet, daß** es eine Dispersionsstabilität, wie in der Beschreibung definiert, von mindestens drei Monaten aufweist.

18. Verfahren zur Herstellung eines gießbaren Nahrungsmittelproduktes nach einem der vorhergehenden Ansprüche, **gekennzeichnet durch** die Schritte:
- Auswählen eines flüssigen Lipids und eines festen Lipids, das ein Kristallgitter in dem flüssigen Lipid bilden kann,
- Erhitzen eines Gemisches aus dem flüssigen Lipid und zumindest 0,1 Gew.-%, aber weniger als 1 Gew.-% des festen Lipids, bis sich das feste Lipid vollständig gelöst oder verflüssigt hat,
- schnelles Abkühlen des verflüssigten Lipidgemisches unter starken Scherbedingungen von 60 °C auf 0 °C bis 5 °C innerhalb von 2 Minuten, bevorzugt innerhalb von 1 Minute,
- Ermöglichen, daß das abgekühlte Gemisch bei 0 bis 5 °C unter bewegungslosen Bedingungen für mindestens eine Stunde, bevorzugt für mindestens 24 Stunden, kristallisiert, was zu einer transluzenten Matrix führt,
- Beimischen zu der Matrix von 0,1 bis 30 Gew.-% Teilchen, wobei die Prozentsätze bezogen auf das Endprodukt berechnet werden, unter vorsichtigem Rühren, bis die Teilchen gleichmäßig verteilt sind.

## Revendications

1. Produit alimentaire versable constitué d'une matrice lipidique contenant des particules dispersées de façon stable ayant une taille d'au moins un micron et une densité qui est de 0 à 25 % supérieure ou inférieure à la densité du lipide, lequel lipide
- comprend de 95 à 99,9 % en poids d'un lipide liquide, au moins 0,1 % en poids mais moins de 1 % en poids d'un lipide cristallisé et de 0 à 4,9 % en poids d'une matière non lipidique, les pourcentages étant calculés par rapport au poids de la matrice, la matrice étant **caractérisée par** une translucidité d'au moins 55 %.

2. Produit alimentaire selon la revendication 1, **caractérisé en ce que** les lipides de la matrice sont essentiellement constitués de triglycérides ou de diglycérides ou d'un mélange des deux.

3. Produit alimentaire selon l'une quelconque des revendications précédentes, **caractérisé en ce que** les lipides de la matrice sont constitués de 1 à 100 % en poids de triglycérides et de 0 à 99 % en poids de diglycérides.

4. Produit alimentaire selon l'une quelconque des revendications précédentes, **caractérisé en ce que** le lipide cristallisé est choisi dans le groupe constitué des matières grasses constituées de triglycérides entièrement saturées, de stérols d'origine végétale, d'esters de stérols d'origine végétale et d'acide 12-hydroxystéarique.

5. Produit alimentaire selon l'une quelconque des revendications précédentes, **caractérisé en ce que** le lipide cristallisé est une matière grasse choisie dans le groupe constitué de l'huile de colza entièrement hydrogénée à haute teneur en acide érucique, de l'huile de colza, interestérifiée entièrement hydrogénée à haute teneur en acide érucique, de l'huile de tournesol entièrement hydrogénée, de l'huile d'arachide entièrement hydrogénée et de leurs mélanges.

6. Produit alimentaire selon l'une quelconque des revendications précédentes, **caractérisé en ce qu'**il contient une matière grasse à base de triglycérides entièrement saturée ainsi que de l'acide 12-hydroxystéarique.

7. Produit alimentaire selon l'une quelconque des revendications précédentes, **caractérisé en ce que** le lipide contient de 0,1 à 0,9 % en poids, de préférence de 0,2 à 0,7 % en poids, plus préférablement de 0,4 à 0,6 % en poids de matière lipidique cristallisée par rapport à la matrice.

8. Produit alimentaire selon l'une quelconque des revendications précédentes, **caractérisé en ce que** le lipide contient un émulsifiant, de préférence choisi dans le groupe constitué des esters d'acide gras de polyglycérol, des esters de sorbitan, du polyricinoléate de polyglycérol, des esters de polyoxyéthylène sorbitan, des esters de propylène glycol et des esters d'acides gras de sucrose.

9. Produit alimentaire selon la revendication précédente, **caractérisé en ce que** le lipide contient de 0,1 à 2 % en poids d'un émulsifiant par rapport au poids du lipide.

10. Produit alimentaire selon l'une quelconque des revendications précédentes, **caractérisé par** la présence d'une matrice lipidique qui a un indice de Bostwick d'au moins 12, de préférence d'au moins 18.

11. Produit alimentaire versable selon l'une quelconque des revendications précédentes, **caractérisé en ce que** la teneur des particules dispersées est de 0,1 à 30 % en poids par rapport au poids du produit alimentaire.

12. Produit alimentaire versable selon l'une quelconque des revendications précédentes, **caractérisé en ce que** les particules comprennent une matière sensible à l'humidité.

13. Produit alimentaire versable selon l'une quelconque des revendications précédentes, **caractérisé en ce que** le matériau des particules est choisi dans le groupe constitué du gros sel, des particules provenant des fruits, des herbes aromatiques, des graines, des bulles de gaz, de la farine, des protéines, des vitamines, des polyphénols et des gouttelettes aqueuses.

14. Produit alimentaire versable selon l'une quelconque des revendications précédentes, **caractérisé en ce que** les particules peuvent se distinguer à l'oeil nu.

15. Produit alimentaire versable selon l'une quelconque des revendications précédentes, **caractérisé en ce que** les particules peuvent se distinguer par leur couleur et/ou leur forme.

16. Produit alimentaire versable selon l'une quelconque des revendications précédentes, **caractérisé en ce que** la distribution stable des particules dans la matrice est maintenue pendant au moins 2 semaines après la préparation.

17. Produit alimentaire versable selon l'une quelconque des revendications précédentes, **caractérisé en ce qu'**il a une stabilité en dispersion telle que définie dans le mémoire descriptif d'au moins trois mois.

18. Procédé de préparation d'un produit alimentaire versable selon l'une quelconque des revendications précédentes, **caractérisé par** les étapes consistant à :
- sélectionner un lipide liquide et un lipide solide capable de former un réseau cristallin dans le lipide liquide,
- chauffer un mélange du lipide liquide et d'au moins 0,1 % en poids, mais de moins de 1 % en poids, du lipide solide, jusqu'à ce que le lipide solide soit entièrement dissout ou liquéfié,
- refroidir rapidement le mélange liquéfié de lipides dans des conditions de fort cisaillement de 60 °C jusqu'à une température de 0° à 5 °C en l'espace de 2 minutes, de préférence en l'espace de 1 minute,
- laisser le mélange refroidi cristalliser à une température de 0° à 5 °C dans des conditions calmes pendant au moins 1 heure, de préférence pendant au moins 24 heures, ce qui donne une matrice translucide,
- mélanger à la matrice de 0, 1 à 30 % en poids de particules, le pourcentage étant calculé par rapport au produit final, tout en agitant doucement jusqu'à ce que les particules soient réparties de façon homogène.
